# EUROPEAN PATENT APPLICATION

(11) **EP 4 084 148 A1**
(43) Date of publication of application: **02.11.2022**
(21) Application number: 21215268.0
(22) Date of filing: 16.12.2021
(51) Int. Cl.: H01M 4/62, H01M 4/139, H01M 4/13, H01M 4/04, H01M 4/131, H01M 4/133, H01M 4/136, H01M 4/1391, H01M 4/1393, H01M 4/1397, H01M 4/485, H01M 4/505, H01M 4/525, H01M 4/58, H01M 4/587, H01M 10/0525

(54) **ELECTRODE MATERIAL, LIQUID COMPOSITION, ELECTRODE AND ELECTROCHEMICAL ELEMENT, AS WELL AS METHOD FOR PRODUCING AN ELECTRODE AND METHOD FOR PRODUCING AN ELECTROCHEMICAL ELEMENT**

(30) Priority: 08.01.2021 JP 2021002017
(71) Applicant: Ricoh Company, Ltd., Tokyo 143-8555 (JP)
(72) Inventor: SAGISAKA, Toshiya, Tokyo, 143-8555 (JP); KURIYAMA, Hiromichi, Tokyo, 143-8555 (JP); NAKAJIMA, Satoshi, Tokyo, 143-8555 (JP); TANTITARNTONG, Porraphon, Tokyo, 143-8555 (JP)
(74) Representative: Marks & Clerk LLP

(57) **Abstract**

Provided is an electrode material. In the electrode material, one selected from monocyclic or polycyclic aryl groups and monocyclic or polycyclic heteroaryl groups, and one selected from alkyl groups and alkylene glycol ether groups are bonded to each other via a carbonyl group.

## Description

### BACKGROUND OF THE INVENTION

### Field of the Invention

The present disclosure relates to an electrode material, a liquid composition, an electrode, and an electrochemical element, and a method for producing an electrode and a method for producing an electrochemical element.

### Description of the Related Art

Electrochemical elements represented by lithium ion secondary batteries are mounted on, for example, portable devices, hybrid cars, and electric vehicles, and are in an increasing demand. There are also increasing needs for thin batteries that can be mounted on various wearable devices and medical patches. Hence, requirements for electrochemical elements have been diversifying.

One method hitherto known as a method for producing an electrode that constitutes an electrochemical element forms an electrode-piled layer on an electrode base material by applying a liquid composition using, for example, a die coater, a comma coater, and a reverse roll coater. For example, it is commonly done to form an electrode-piled layer on an electrode base material by screen-printing a liquid composition for an electrode-piled layer on the electrode base material.

However, there is a need for producing plates matching each and every need in order to screen-print layers in the shapes matching the needs. Hence, studies are made into methods for forming an electrode-piled layer on an electrode base material by discharging a liquid composition for an electrode-piled layer to the electrode base material using a liquid discharging apparatus (for example, see Japanese Unexamined Patent Application Publication No. 2009-152180 (Japanese Patent No. 5571304) and Japanese Unexamined Patent Application Publication No. 2010-97946 (Japanese Patent No. 5913780)).

Liquid discharging methods discharge minute liquid droplets of a liquid composition through discharging holes of a liquid discharging head. As the methods for the liquid discharging head to discharge liquid droplets, for example, a piezo method, a thermal method, and a valve method are known. Among these methods, the piezo method can accurately control the discharging amount of the liquid composition by controlling voltages, and in addition, is lowly influential to the environment in which the method is used and highly durable because the method does not involve heating.

The liquid composition that can be discharged by the liquid discharging methods needs to have a viscosity lower than the viscosity, at 25 degrees C, of existing liquid compositions, because the viscosity, at 25 degrees C, of the liquid composition that can be discharged by the liquid discharging methods is typically from some Pascal milliseconds (mPa·s) through some hundreds of Pascal milliseconds (mPa·s) in terms of storage stability and discharging stability. Particularly, when using a liquid discharging head of a piezo type, there is a need for adjusting the viscosity and the surface tension of the liquid composition to appropriate values in order to improve discharging stability.

The liquid composition to be discharged by these liquid discharging methods contains, for example, an active substance, a conductive assistant, and a binder, and in addition, for example, a dispersant and a solvent that are needed to stably maintain the liquid composition to be discharged.

However, the materials such as the dispersant and the solvent needed to stably maintain the liquid composition not only become unnecessary after the liquid composition is applied on a base material, but also have the risk of adversely influencing element properties in an electrochemical element due to unpredictable electrochemical reactions of the materials and products produced due to deterioration of the materials.

### SUMMARY OF THE INVENTION

The present disclosure has an object to provide an electrode material that can produce a liquid composition having an excellent dispersibility and an excellent stability while suppressing adverse influences on electrochemical properties.

According to one aspect of the present disclosure, an electrode material is provided. In the electrode material, one selected from the group consisting of monocyclic or polycyclic aryl groups and monocyclic or polycyclic heteroaryl groups, and one selected from the group consisting of alkyl groups and alkylene glycol ether groups are bonded to each other via a carbonyl group.

The present disclosure can provide an electrode material that can produce a liquid composition having an excellent dispersibility and an excellent stability while suppressing adverse influences on electrochemical properties.

### BRIEF DESCRIPTION OF THE DRAWINGS

FIG. 1 is a cross-sectional view illustrating an example of a negative electrode used in the present disclosure;
FIG. 2 is an exemplary view illustrating an example of a method for producing a negative electrode used in the present disclosure;
FIG. 3 is an exemplary view illustrating another example of a method for producing a negative electrode used in the present disclosure;
FIG. 4 is an exemplary view illustrating a modified example of a liquid discharging apparatus of FIG. 2 and FIG. 3;
FIG.5 is a cross-sectional view illustrating an example of a positive electrode used in the present disclosure;
FIG. 6 is a cross-sectional view illustrating an example of an electrode element constituting an electrochemical element of the present disclosure;
FIG. 7 is a cross-sectional view illustrating an example of an electrochemical element of the present disclosure; and
FIG. 8 is a graph plotting the results of evaluation of electrochemical stability in Examples and Comparative Examples.

### DESCRIPTION OF THE EMBODIMENTS

### (Electrode material)

In an electrode material of the present disclosure, one selected from the group consisting of monocyclic or polycyclic aryl groups and monocyclic or polycyclic heteroaryl groups, and one selected from the group consisting of alkyl groups and alkylene glycol ether groups are bonded to each other via a carbonyl group.

The electrode material is not particularly limited and may be appropriately selected depending on the intended purpose so long as the electrode material is a material having the structure described above and used for production of an electrode. At least one selected from dispersants and binders is preferable as the electrode material.

### -Dispersant-

The dispersant is a compound that can disperse and stably maintain various materials in a liquid composition to be discharged, and is suitably used as a dispersant of a liquid composition containing, for example, an active substance, an insulating material, and an electrolyte material.

### -Binder-

The binder is not particularly limited so long as the binder is a compound that can bind negative electrode materials with each other, positive electrode materials with each other, a negative electrode material and an electrode base material for a negative electrode with each other, and a positive electrode material and an electrode base material for a positive electrode with each other. A compound that does not tend to act to increase the viscosity of a liquid composition is preferable as the binder in terms of suppressing nozzle clogging during discharging through inkjet head nozzles.

The monocyclic or polycyclic aryl group of the electrode material may be any selected from condensed polycyclic groups and noncondensed polycyclic groups. Examples of the monocyclic or polycyclic aryl group include a phenyl group, a naphthyl group, a pyrenyl group, a fluorenyl group, an azulenyl group, an anthryl group, a triphenylenyl group, a chrysenyl group, a biphenyl group, and a terphenyl group.

Examples of the monocyclic or polycyclic heteroaryl group include a pyridinyl group, a pyrimidinyl group, a quinolinyl group, an isoquinolinyl group, an indolyl group, a benzofuranyl group, a benzothienyl group, an acridinyl group, a fenadinyl group, and a carbazolyl group.

As the alkyl group, one that contains 1 or more but 30 or less carbon atoms is preferable. Examples of the alkyl group include a methyl group, an ethyl group, a propyl group, a butyl group, an isopropyl group, an isobutyl group, a pentyl group, a hexyl group, a heptyl group, an ethylhexyl group, an octyl group, a decyl group, a dodecyl group, a 2-butyloctyl group, and an octadecyl group.

The alkylene glycol ether group is represented by General formula (a) below.

[General formula (a)] -(RO)ₙ-

In General formula (a), R represents an alkylene group, and n represents an integer of 3 or greater.

Examples of the alkylene group include a straight-chain alkylene group, a branched alkylene group, and a cycloalkylene group.

Examples of the straight-chain alkylene group include a methylene group, an ethylene group, a propylene group, an n-butylene group, and an n-pentylene group.

The branched alkylene group is the straight-chain alkylene group in which at least one hydrogen atom thereof is replaced by an alkyl group. Examples of the branched alkylene group include a methyl methylene group, an ethyl methylene group, a propyl methylene group, a butyl methylene group, a methyl ethylene group, an ethyl ethylene group, a propyl ethylene group, a methyl propylene group, a 2-ethyl propylene group, a dimethyl propylene group, and a methyl butylene group.

Examples of the cycloalkylene group include a monocyclic cycloalkylene group, a bridged-ring cycloalkylene group, and a condensed-ring cycloalkylene group.

Examples of the monocyclic cycloalkylene group include a cyclopentylene group.

A compound represented by General formula (I) below is preferable as the electrode material.

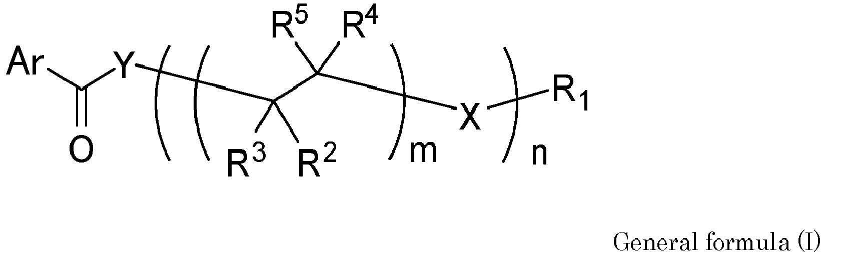

In General formula (I), Ar represents one selected from monocyclic or polycyclic aryl groups and monocyclic or polycyclic heteroaryl groups, and the aryl groups and the heteroaryl groups may each have a substituent(s). R¹, R², R³, R⁴ and R⁵ each independently represent a hydrogen atom, a substituted or unsubstituted alkyl group, or a substituted or unsubstituted cycloalkyl group. X and Y each independently represent one selected from a single bond, an oxygen atom, -(CH2)ₚ-, and -(CH₂)ₚCH- (where p represents an integer of from 1 through 10).

m and n represent positive integers, and m is preferably from 1 through 10 and n is preferably from 1 through 200.

As the substituted or unsubstituted alkyl group represented by R¹ to R⁵ in General formula (I), an alkyl group containing 1 or more but 30 or less carbon atoms is preferable and an alkyl group containing 1 or more but 18 or less carbon atoms is more preferable in terms of availability of the material. The alkyl group may be straight-chained or may be branched.

Examples of the alkyl group containing 1 or more but 30 or less carbon atoms include a methyl group, an ethyl group, a propyl group, a butyl group, an isopropyl group, an isobutyl group, a pentyl group, a hexyl group, a heptyl group, an ethylhexyl group, an octyl group, a decyl group, a dodecyl group, a 2-butyloctyl group, and an octadecyl group.

As the substituted or unsubstituted cycloalkyl group represented by R¹, R², R³, R⁴ and R⁵, a cycloalkyl group containing 3 or more but 30 or less carbon atoms is preferable and a cycloalkyl group containing 3 or more but 18 or less carbon atoms is more preferable in terms of availability of the material.

The cycloalkyl group may be monocyclic or may be polycyclic.

Examples of the cycloalkyl group containing 3 or more but 30 or less carbon atoms include a cyclopropyl group, a cyclobutyl group, a cyclopentyl group, a cyclohexyl group, and an adamantyl group.

The substituent for R¹ to R⁵ is not particularly limited and may be appropriately selected depending on the intended purpose. Examples of the substituent include a halogen atom, a cyano group, an alkyl group containing from 1 through 12 carbon atoms, a phenyl group, a phenyl group for which a cycloalkyl group containing from 3 through 12 carbon atoms or an alkoxy group containing from 1 through 12 carbon atoms is substituted, a hydroxyl group, and a carboxyl group. A plurality of substituents of the same kind selected from these kinds of substituents may be incorporated, or a plurality of substituents of different kinds selected from these kinds of substituents may be incorporated.

The monocyclic or polycyclic aryl group represented by Ar in General formula (I) may be any selected from condensed polycyclic groups and noncondensed polycyclic groups. Examples of the monocyclic or polycyclic aryl group include a phenyl group, a naphthyl group, a pyrenyl group, a fluorenyl group, an azulenyl group, an anthryl group, a triphenylenyl group, a chrysenyl group, a biphenyl group, and a terphenyl group.

Examples of the monocyclic or polycyclic heteroaryl group include a pyridinyl group, a pyrimidinyl group, a quinolinyl group, an isoquinolinyl group, an indolyl group, a benzofuranyl group, a benzothienyl group, an acridinyl group, a fenadinyl group, and a carbazolyl group.

Examples of the method for synthesizing the compound represented by General formula (I) include a method of allowing an aromatic carboxylic acid derivative and an alcohol compound to undergo an esterification reaction, and a method of allowing an aromatic compound and an acid halide to undergo a Friedel-Crafts reaction.

Examples of the compound represented by General formula (I) include the followings. The compound represented by General formula (I) is not limited to the followings. In the followings, n represents an integer of 1 or greater.

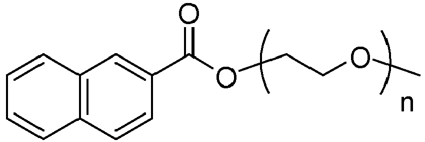

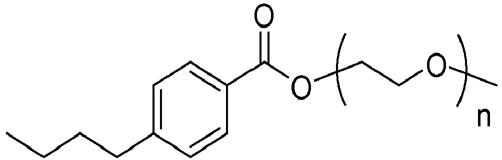

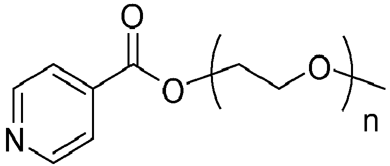

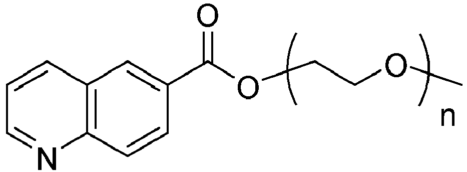

### (Liquid composition)

A liquid composition of the present disclosure contains the electrode material of the present disclosure, a solvent, and an active substance, and further contains other components as needed.

### <Solvent>

The solvent is not particularly limited and may be appropriately selected depending on the intended purpose so long as the active substance can be dispersed in the solvent. Examples of the solvent include water, ethylene glycol, propylene glycol, N-methyl-2-pyrrolidone, cyclohexanone, acetic acid esters, mesitylene, 2-n-butoxy methanol, 2-dimethyl ethanol, N,N-dimethyl acetamide, N,N-dimethyl formamide, dimethyl sulfoxide, lactic acid esters, and tetramethyl urea. One of these solvents may be used alone or two or more of these solvents may be used in combination.

### <Active substance>

As the active substance, a positive electrode active substance or a negative electrode active substance that can be applied to electrochemical elements can be used.

The positive electrode active substance is not particularly limited so long as the positive electrode active substance can reversibly absorb and release an alkali metal ion. An alkali metal-containing transition metal compound can be used as the positive electrode active substance.

Examples of the alkali metal-containing transition metal compound include lithium-containing transition metal compounds such as composite oxides containing one or more elements selected from the group consisting of cobalt, manganese, nickel, chromium, iron, and vanadium, and lithium.

Examples of the lithium-containing transition metal compounds include lithium cobaltate, lithium nickelate, and lithium manganate.

As the alkali metal-containing transition metal compound, polyanionic compounds containing an XO₄ tetrahedron (X represents, for example, P, S, As, Mo, W, and Si) in the crystal structure thereof can also be used. Among such compounds, lithium-containing transition metal phosphoric acid compounds such as lithium iron phosphate and lithium vanadium phosphate are preferable in terms of a cycle property, and lithium vanadium phosphate is particularly preferable in terms of coefficient of lithium diffusion and input/output properties of an electrochemical element.

In terms of electron conductivity, the polyanionic compound is preferably a composite compound coated with a conductive assistant such as a carbon material.

The negative electrode active substance is not particularly limited so long as the negative electrode active substance can reversibly absorb and release an alkali metal ion. A carbon material containing graphite having a graphite-type crystal structure can be used as the negative electrode active substance.

Examples of the carbon material include natural graphite, artificial graphite, hardly graphitizable carbon (hard carbon), and easily graphitizable carbon (soft carbon).

Examples of the negative electrode active substance other than the carbon material include lithium titanate and titanium oxide.

It is preferable to use a high-capacity material such as silicon, tin, silicon alloys, tin alloys, silicon oxide, silicon nitride, and tin oxide as the negative electrode active substance in terms of the energy density of an electrochemical element.

When the active substance contains lithium, the solvent is preferably a nonaqueous solvent. In this case, the water content in the liquid composition is preferably 5% by mass or less, and more preferably 1% by mass or less. When the water content in the liquid composition is 5% by mass or less, lithium contained in the active substance reacts with water to form a compound such as lithium carbonate, making it possible to suppress reduction in the service capacity of an electrochemical element. Moreover, it is possible to suppress decomposition of the compound such as lithium carbonate and resulting emission of a gas during charging and discharging of an electrochemical element.

The mode diameter of the active substance is preferably 3 micrometers or less and more preferably 1 micrometer or less. When the mode diameter of the active substance is 3 micrometers or less, the liquid composition has an improved discharging stability and an improved storage stability.

The cumulative 10% volume-based particle diameter (D₁₀) of the active substance is preferably 0.1 micrometers or greater and more preferably 0.15 micrometers or greater. When the diameter (D₁₀) of the active substance is 0.1 micrometers or greater, the liquid composition has an improved storage stability.

The content of the active substance in the liquid composition is preferably 10% by mass or greater and more preferably 15% by mass or greater. When the content of the active substance in the liquid composition is 10% by mass or greater, a small number of times of printing is needed for forming an electrode-piled layer of a predetermined targeted amount.

### <Other components>

Examples of the other components include binders other than the electrode material described above, a conductive assistant, an insulating material, and an electrolyte material.

### -Binder other than electrode material-

As the binder other than the electrode material, for example, polymer compounds soluble in solvents, polymer compounds dispersed in solvents, and monomer compounds can be used. After the liquid composition containing a monomer compound is applied by an inkjet method, the monomer compound is polymerized. It is preferable that the monomer compound contain, for example, one or more kinds of molecules containing a polymerizable moiety, and be able to bind electrode materials with each other and an electrode material and an electrode base material with each other through undergoing polymerization at 25 degrees C.

The viscosity of the polymer compound soluble in a solvent after dissolved needs at least to be lower than or equal to a viscosity at which the polymer compound is inkjet-printable.

The polymer compound is not particularly limited and may be appropriately selected depending on the intended purpose so long as the polymer compound can secure the binding ability at a viscosity lower than or equal to the viscosity mentioned above. Examples of the polymer compound include polyamide compounds, polyimide compounds, polyamide imide compounds, ethylene-propylene-butadiene rubbers (EPBR), styrene-butadiene rubbers (SBR), isoprene rubbers, and polyethylene glycol (PEO). One of these polymer compounds may be used alone or two or more of these polymer compounds may be used in combination.

In order not to increase the viscosity of the liquid composition, it is possible to use polymeric particles as the binder. In this case, the average particle diameter of the polymeric particles needs at least to be smaller than an inkjet head nozzle diameter and is preferably 0.01 micrometers or greater but 1 micrometer or less.

Examples of the material constituting the polymeric particles include polyvinylidene fluoride, acrylic resins, styrene-butadiene copolymers, polyethylene, polypropylene, polyurethane, nylon, polytetrafluoroethylene, polyphenylene sulfide, polyethylene terephthalate, and polybutylene terephthalate. One of these materials may be used alone or two or more of these materials may be used in combination.

### -Conductive assistant-

As the conductive assistant, for example, carbon materials such as conductive carbon black, carbon nanofiber, carbon nanotube, graphene, and graphite particles can be used.

As described above, the conductive assistant may be a composite material with the active substance.

Conductive carbon black can be produced by, for example, a furnace method, an acetylene method, and a gasification method.

As the conductive assistant other than carbon materials, for example, metallic particles and metallic fibers of, for example, aluminum, can be used.

The mass ratio of the conductive assistant to the active material is preferably 10% by mass or less and more preferably 8% by mass or less. When the mass ratio of the conductive assistant to the active material is 10% by mass or less, the liquid composition of the present embodiment has an improved storage stability.

The viscosity of the liquid composition at 25 degrees C is preferably 200 mPa·s or lower and more preferably 100 mPa·s or lower. When the viscosity of the liquid composition at 25 degrees C is 200 mPa·s or lower, the liquid composition has an improved discharging stability.

The lower limit of the viscosity of the liquid composition at 25 degrees C is not particularly limited, and is the viscosity of the solvent alone.

The viscosity of the liquid composition can be measured with, for example, a TV25 viscometer (available from Toki Sangyo Co., Ltd.) at a rotation number of 100 rpm at a temperature of 25 degrees C.

It is possible to produce the liquid composition by dissolving or dispersing a composition containing the electrode material of the present disclosure and the active substance in a solvent.

The liquid composition can be used for producing an electrode of an electrochemical element.

The electrochemical element is not particularly limited so long as the electrochemical element can store electricity. Examples of the electrochemical element include batteries and capacitors.

### (Method for producing electrode)

A method for producing an electrode of the present disclosure includes a step of discharging the liquid composition of the present disclosure onto an electrode base material, and further includes other steps as needed.

It is preferable that the method for producing an electrode further include a step of pressurizing the electrode base material onto which the liquid composition is discharged. This makes it hard for the components constituting the electrode-piled layer to peel, leading to improvement of the reliability of the electrochemical element.

The material constituting the electrode base material (current collector) is not particularly limited so long as the material has conductivity and is stable with respect to the potential applied to the material.

### <Negative electrode>

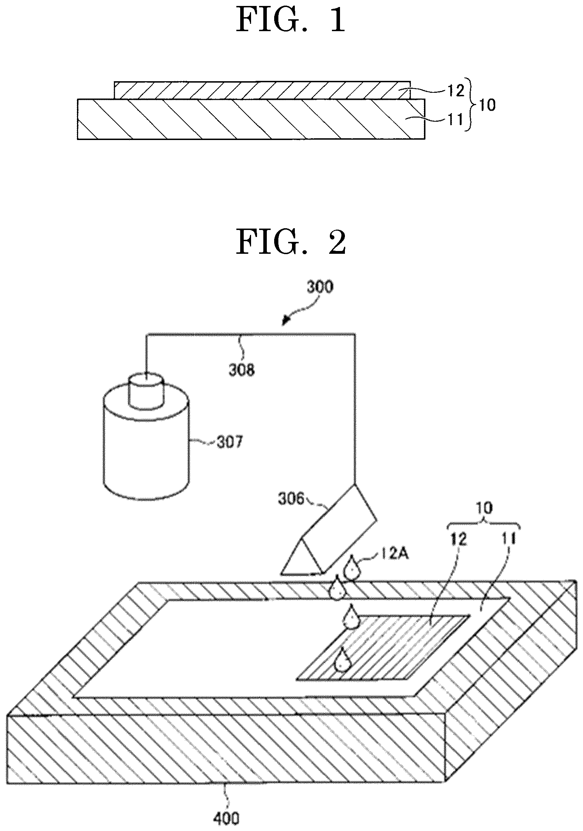

FIG. 1 illustrates an example of a negative electrode used in the present disclosure.

The negative electrode 10 includes a negative electrode base material 11, and a negative electrode-piled layer 12 formed on one surface of the negative electrode base material 11, the negative electrode-piled layer 12 including a negative electrode active substance and the electrode material of the present disclosure.

The negative electrode-piled layer 12 may be formed on both surfaces of the negative electrode base material 11.

The shape of the negative electrode 10 is not particularly limited. Examples of the shape of the negative electrode 10 include a flat plate shape.

Examples of the material constituting the negative electrode base material 11 include stainless steel, nickel, aluminum, and copper.

### <Method for producing negative electrode>

FIG. 2 illustrates an example of the method for producing a negative electrode used in the present disclosure.

The method for producing a negative electrode 10 includes a step of discharging a liquid composition 12A onto a negative electrode base material 11 using a liquid discharging apparatus 300.

The liquid composition 12A contains the electrode material of the present disclosure, a negative electrode active substance, and a solvent.

The liquid composition 12A is stored in a tank 307 and supplied to a liquid discharging head 306 from the tank 307 through a tube 308.

The liquid discharging apparatus 300 may include a mechanism configured to cap the nozzles in order to prevent drying of the liquid composition 12A while the liquid discharging head 306 is not discharging the liquid composition 12A.

When producing the negative electrode 10, the negative electrode base material 11 is set on a heatable stage 400, and subsequently liquid droplets of the liquid composition 12A are discharged onto the negative electrode base material 11 and then heated. Here, the stage 400 may be moved or the liquid discharging head 306 may be moved.

When heating the liquid composition 12A discharged onto the negative electrode base material 11, the stage 400 may heat the liquid composition 12A or any other heating mechanism than the stage 400 may heat the liquid composition 12A.

The heating mechanism is not particularly limited so long as the heating mechanism does not have direct contact with the liquid composition 12A. Examples of the heating mechanism include a resistance heater, an infrared heater, and a fan heater. It is possible to install a plurality of heating mechanisms.

The heating temperature is not particularly limited so long as the heating temperature is a temperature that can volatilize a solvent, and is preferably in the range of from 70 degrees C through 150 degrees C in terms of power consumption.

When heating the liquid composition 12A discharged onto the negative electrode base material 11, it is possible to irradiate the liquid composition 12A with ultraviolet rays.

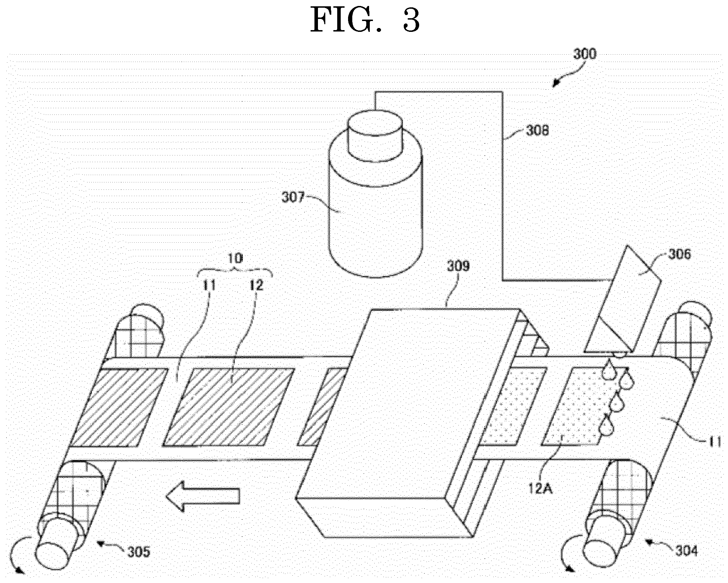

FIG. 3 illustrates another example of the method for producing a negative electrode of the present disclosure.

The method for producing a negative electrode 10 includes a step of discharging a liquid composition 12A onto a negative electrode base material 11 using a liquid discharging apparatus 300.

First, an elongate negative electrode base material 11 is prepared. The negative electrode base material 11 is wound around a cylindrical core, and set on a sending roller 304 and a takeup roller 305 in a manner that a surface of the negative electrode base material 11 to be provided with a negative electrode-piled layer 12 faces the top side of FIG. 3. The sending roller 304 and the takeup roller 305 are rotated counterclockwise, to convey the negative electrode base material 11 from the right-hand side to the left-hand side of FIG. 3. Then, a liquid discharging head 306 installed above the negative electrode base material 11 present between the sending roller 304 and the takeup roller 305 discharges liquid droplets of the liquid composition 12A onto the negative electrode base material 11 conveyed. The liquid droplets of the liquid composition 12A are discharged in a manner to coat at least a part of the negative electrode base material 11.

It is possible to install a plurality of liquid discharging heads 306 in a direction approximately parallel with or approximately perpendicular to the conveying direction of the negative electrode base material 11.

Next, the sending roller 304 and the takeup roller 305 convey the negative electrode base material 11 onto which the liquid composition 12A is discharged, to a heating mechanism 309. As a result, the solvent contained in the liquid composition 12A on the negative electrode base material 11 is volatilized to form a negative electrode-piled layer 12. In this way, a negative electrode 10 is obtained. Subsequently, the negative electrode 10 is cut into a desired size by, for example, punching.

The heating mechanism 309 is not particularly limited so long as the heating mechanism 309 does not have direct contact with the liquid composition 12A. Examples of the heating mechanism 309 include a resistance heater, an infrared heater, and a fan heater.

The heating mechanism 309 may be installed at either above or below the negative electrode base material 11, or a plurality of heating mechanisms may be installed.

The heating temperature is not particularly limited so long as the heating temperature is a temperature that can volatilize the solvent, and is preferably in the range of from 70 degrees C through 150 degrees C in terms of power consumption.

When heating the liquid composition 12A discharged onto the negative electrode base material 11, it is possible to irradiate the liquid composition 12A with ultraviolet rays.

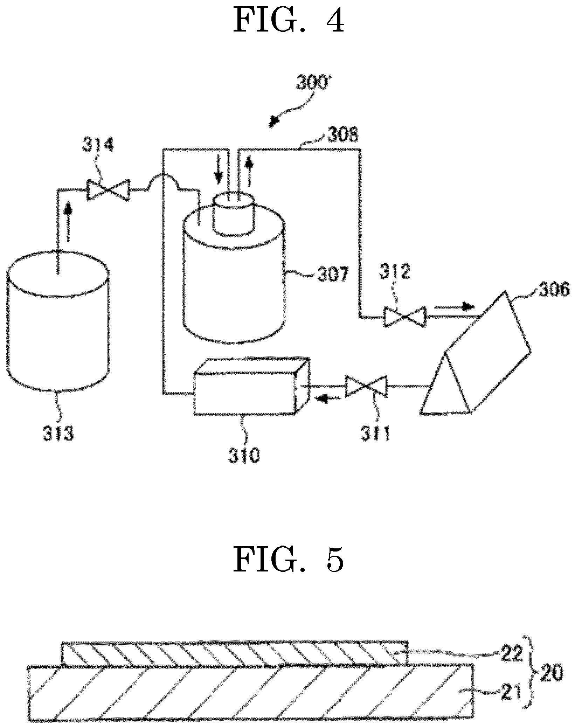

FIG. 4 illustrates a modified example of the liquid discharging apparatus 300.

The liquid discharging apparatus 300' can circulate a liquid composition 12A through a liquid discharging head 306, a tank 307, and a tube 308 by controlling a pump 310 and valves 311 and 312.

The liquid discharging apparatus 300' is provided with an external tank 313. Hence, when the liquid composition 12A in the tank 307 reduces, the liquid discharging apparatus 300' can have the liquid composition 12A supplied into the tank 307 from the external tank 313 by controlling the pump 310 and the valves 311, 312, and 314.

Using the liquid discharging apparatuses 300 and 300', it is possible to discharge the liquid composition 12A to a targeted position on the negative electrode base material 11. Moreover, using the liquid discharging apparatuses 300 and 300', it is possible to bind the above and below contacting surfaces of the negative electrode base material 11 and the negative electrode-piled layer 12 with each other. Furthermore, using the liquid discharging apparatuses 300 and 300', it is possible to make the thickness of the negative electrode-piled layer 12 uniform.

### <Positive electrode>

FIG. 5 illustrates an example of a positive electrode used in the present disclosure.

The positive electrode 20 includes a positive electrode base material 21, and a positive electrode-piled layer 22 formed on one surface of the positive electrode base material 21, the positive electrode-piled layer 22 including a positive electrode active substance and the electrode material of the present disclosure. The positive electrode-piled layer 22 may be formed on both surfaces of the positive electrode base material 21.

The shape of the positive electrode 20 is not particularly limited. Examples of the shape of the positive electrode 20 include a flat plate shape.

Examples of the material constituting the positive electrode base material 21 include stainless steel, aluminum, titanium, and tantalum.

### <Method for producing positive electrode>

The method for producing the positive electrode 20 is the same as the method for producing the negative electrode 10 except that the liquid composition is discharged onto the positive electrode base material 21.

The liquid composition contains a positive electrode active substance, the electrode material of the present disclosure, and a solvent.

### (Method for producing electrochemical element)

A method for producing an electrochemical element of the present disclosure includes a step formed of the method for producing an electrode of the present disclosure, and further includes other steps as needed.

Specifically, the method for producing an electrochemical element includes a step of discharging the liquid composition of the present disclosure onto an electrode base material, or includes the step of discharging the liquid composition of the present disclosure onto an electrode base material and a step of pressurizing the electrode base material onto which the liquid composition is discharged, and further includes other steps as needed.

### <Electrode element>

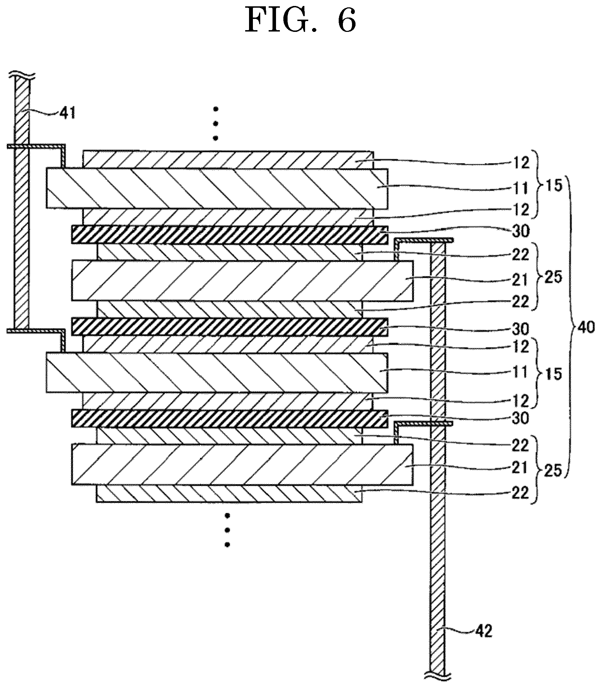

FIG. 6 illustrates an example of an electrode element constituting an electrochemical element of the present disclosure.

The electrode element 40 includes negative electrodes 15 and positive electrodes 25 that are laminated via separators 30. The positive electrodes 25 are laminated on both sides of a negative electrode 15. A lead wire 41 is coupled to negative electrode base materials 11. A lead wire 42 is coupled to positive electrode base materials 21.

The negative electrode 15 is the same as the negative electrode 10 except that negative electrode-piled layers 12 are formed on both surfaces of the negative electrode base material 11.

The positive electrode 25 is the same as the positive electrode 20 except that positive electrode-piled layers 22 are formed on both surfaces of the positive electrode base material 21.

The number of negative electrodes 15 and positive electrodes 25 laminated in the electrode element 40 is not particularly limited.

The number of negative electrodes 15 and the number of positive electrodes 25 in the electrode element 40 may be the same or different.

### <Separator>

The separator 30 is provided between a negative electrode 15 and a positive electrode 25 in order to prevent short-circuiting across the negative electrode 15 and the positive electrode 25.

Examples of the separator 30 include paper such as craft paper, vinylon mixed paper, and synthetic pulp mixed paper, cellophane, polyethylene graft films, polyolefin non-woven fabric such as polypropylene melt blown non-woven fabric, polyamide non-woven fabric, glass fiber non-woven fabric, and micropore films.

The size of the separator 30 is not particularly limited so long as the separator 30 can be used in an electrochemical element.

The separator 30 may have a single-layer structure or a laminated-layer structure.

When a solid electrolyte is used, the separator 30 may be omitted.

### <Electrochemical element>

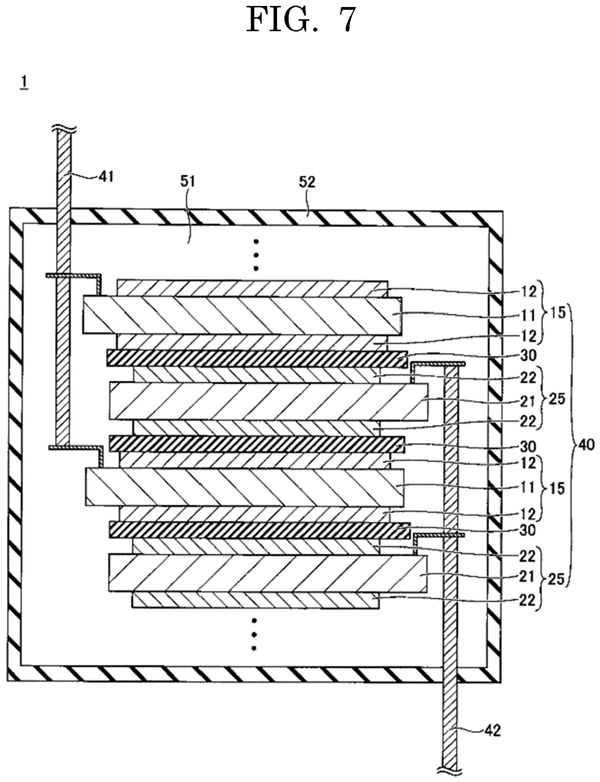

FIG. 7 illustrates a secondary battery as an example of an electrochemical element of the present disclosure.

A secondary battery 1 includes an electrolyte layer 51 formed by injecting an electrolyte aqueous solution or a nonaqueous electrolyte into the electrode element 40. The electrolyte layer 51 is sealed within an outer package 52. Lead wires 41 and 42 of the secondary battery 1 are led out of the outer package52.

The secondary battery 1 may include other members as needed.

The secondary battery 1 is not particularly limited. Examples of the secondary battery 1 include a lithium ion secondary battery.

The shape of the secondary battery 1 is not particularly limited. Examples of the shape of the secondary battery 1 include a laminate type, a cylinder type in which sheet electrodes and separators are formed in spiral shapes, a cylinder type having an inside-out structure in which pellet electrodes and separators are combined, and a coin type in which pellet electrodes and separators are laminated.

### <Electrolyte aqueous solution>

Examples of an electrolyte salt constituting the electrolyte aqueous solution include sodium hydroxide, potassium hydroxide, sodium chloride, potassium chloride, ammonium chloride, zinc chloride, zinc acetate, zinc bromide, zinc iodide, zinc tartrate, and zinc perchloride.

### <Nonaqueous electrolyte>

As the nonaqueous electrolyte, a solid electrolyte or a nonaqueous electrolytic solution can be used.

Here, the nonaqueous electrolytic solution is an electrolytic solution obtained by dissolving an electrolyte salt in a nonaqueous solvent.

### -Nonaqueous solvent-

The nonaqueous solvent is not particularly limited and may be appropriately selected depending on the intended purpose. For example, an aprotonic organic solvent is preferable.

As the aprotonic organic solvent, for example, a carbonate-based organic solvent such as chain carbonate and cyclic carbonate can be used. Of these, chain carbonate is preferable because chain carbonate has a high solvent power for the electrolyte salt.

The viscosity of the aprotonic organic solvent is preferably low.

Examples of chain carbonate include dimethyl carbonate (DMC), diethyl carbonate (DEC), and methylethyl carbonate (EMC).

The content of the chain carbonate in the nonaqueous solvent is preferably 50% by mass or greater. When the content of the chain carbonate in the nonaqueous solvent is 50% by mass or greater, and even if any other nonaqueous solvent contained other than the chain carbonate is a cyclic substance having a high dielectric constant (e.g., cyclic carbonate and cyclic ester), the content of the cyclic substance is low. Hence, even when a nonaqueous electrolytic solution having a high concentration higher than or equal to 2 mol/L (M) is produced, the nonaqueous electrolytic solution has a low viscosity, and can permeate electrodes well and diffuse ions well.

Examples of the cyclic carbonate include propylene carbonate (PC), ethylene carbonate (EC), butylene carbonate (BC), and vinylene carbonate (VC).

Examples of nonaqueous solvents other than carbonate-based organic solvents include ester-based organic solvents such as cyclic ester and chain ester, and ether-based organic solvents such as cyclic ether and chain ether.

Examples of the cyclic ester include γ-butyrolactone (yBL), 2-methyl-γ-butyrolactone, acetyl-γ-butyrolactone, and γ-valerolactone.

Examples of the chain ester include propionic acid alkyl esters, malonic acid dialkyl esters, acetic acid alkyl esters (e.g., methyl acetate (MA) and ethyl acetate), and formic acid alkyl esters (e.g., methyl formate (MF) and ethyl formate).

Examples of the cyclic ether include tetrahydrofuran, alkyl tetrahydrofuran, alkoxy tetrahydrofuran, dialkoxy tetrahydrofuran, 1,3-dioxolane, alkyl-1,3-dioxolane, and 1,4-dioxolane.

Examples of the chain ether include 1,2-dimethoxyethane (DME), diethyl ether, ethylene glycol dialkyl ether, and diethylene glycol dialkyl ether ether.

### <Electrolyte salt>

The electrolyte salt is not particularly limited so long as the electrolyte salt has a high ion conductance and can be dissolved in the nonaqueous solvent.

It is preferable that the electrolyte salt contain a halogen atom.

Examples of a cation constituting the electrolyte salt include a lithium ion.

Examples of an anion constituting the electrolyte salt include BF₄⁻, PF₆⁻, AsF₆⁻, CF₃SO₃⁻, (CF₃SO₂)₂N⁻, and (C₂F₅SO₂)₂N⁻.

A lithium salt is not particularly limited and may be appropriately selected depending on the intended purpose. Examples of the lithium salt include lithium hexafluorophosphate (LiPF₆), lithium borofluoride (LiBF₄), lithium arsenic hexafluoride (LiAsF₆), lithium trifluorometa sulfonate (LICF₃SO₃), lithium bis(trifluoromethyl sulfonyl)imide (LiN(CF₃SO₂)₂), and lithium bis(pentafluoroethyl sulfonyl)imide (LiN(C₂F₅SO₂)₂). One of these lithium salts may be used alone or two or more of these lithium ions may be used in combination. Among these lithium salts, LiPF₆ is preferable in terms of ion conductance and LiBF₄ is preferable in terms of stability.

The concentration of the electrolyte salt in the nonaqueous electrolytic solution may be appropriately selected depending on the intended purpose, and is preferably 1 mol/L or greater but 2 mol/L or less when a nonaqueous electrochemical element is a swing type and preferably 2 mol/L or greater but 4 mol/L or less when a nonaqueous electrochemical element is a reserve type.

### <Applications of electrochemical element>

The applications of the electrochemical element are not particularly limited and may be appropriately selected depending on the intended purpose. Examples of the applications of the electrochemical element include laptop personal computers, stylus personal computers, mobile computers, electronic book players, portable phones, portable facsimile machines, portable copiers, portable printers, stereophones, video movies, liquid crystal television sets, handheld vacuum cleaners, portable CDs, mini disks, transceivers, electronic organizers, calculators, memory cards, portable tape recorders, radios, backup power supplies, motors, illumination devices, toys, game consoles, clocks, strobes, and cameras.

### Examples

The present disclosure will be described below by way of Examples. The present disclosure should not be construed as being limited to these Examples.

In Examples below, the particle size distribution of an active substance, and the viscosity and particle size distribution of a liquid composition were measured in the manners described below.

### <Particle size distribution of active substance>

After an active substance was dispersed in water, the particle size distribution of the active substance was measured with a laser diffractive particle size distribution measuring instrument (MASTER SIZER 3000, obtained from Malvern Panalytical Ltd.) at a temperature of 25 degrees C.

### <Viscosity of liquid composition>

The viscosity of a liquid composition was measured with a TV25 viscometer (obtained from Toki Sangyo Co., Ltd.) at a rotation number of 100 rpm at a temperature of 25 degrees C.

### <Particle size distribution of liquid composition>

The particle size distribution of the liquid composition was measured with a laser diffractive particle size distribution measuring instrument (MASTER SIZER 3000, obtained from Malvern Panalytical Ltd.) at a temperature of 25 degrees C.

### (Positive electrode active substance production example 1)

### -Production of positive electrode active substance 1-

Vanadium pentoxide, lithium hydroxide, phosphoric acid, sucrose, and water were mixed to generate a precipitate, and the resultant was spray-dried with a spray dryer. Subsequently, the resultant was ground with a jet mill, to obtain a precursor of lithium vanadium phosphate (Li₃V₂(PO₄)₃) particles. Next, under a nitrogen atmosphere, the precursor of the lithium vanadium phosphate particles was burned at 900 degrees C, to obtain lithium vanadium phosphate particles having a carbon content of 3% by mass. Next, the lithium vanadium phosphate particles were ground with a jet mill in a manner that the cumulative 90% volume-based particle diameter D₉₀ would become less than 3 micrometers, to obtain a positive electrode active substance 1. The mode diameter of the obtained positive electrode active substance 1 was 0.7 micrometers.

### (Positive electrode active substance production example 2)

### -Production of positive electrode active substance 2-

A positive electrode active substance 2 was obtained in the same manner as in Positive electrode active substance production example 1, except that unlike in Positive electrode active substance production example 1, a product obtained by grinding lithium iron phosphate (LiFePO₄) particles (obtained from Sigma-Aldrich Co., LLC) with a jet mill in a manner that the cumulative 90% volume-based particle diameter D₉₀ would become less than 3 micrometers was used instead of the lithium vanadium phosphate (Li₃V₂(PO₄)₃) particles. The mode diameter of the obtained positive electrode active substance 2 was 0.6 micrometers.

### (Positive electrode active substance production example 3)

### -Production of positive electrode active substance 3-

A positive electrode active substance 3 was obtained in the same manner as in Positive electrode active substance production example 1, except that unlike in Positive electrode active substance production example 1, a product obtained by grinding lithium cobaltate (LiCoO₂) particles (obtained from Sigma-Aldrich Co., LLC) with a jet mill in a manner that the cumulative 90% volume-based particle diameter D₉₀ would become less than 3 micrometers was used instead of the lithium vanadium phosphate (Li₃V₂(PO₄)₃) particles. The mode diameter of the obtained positive electrode active substance 3 was 0.9 micrometers.

### (Positive electrode active substance production example 4)

### -Production of positive electrode active substance 4-

A positive electrode active substance 4 was obtained in the same manner as in Positive electrode active substance production example 1, except that unlike in Positive electrode active substance production example 1, a product obtained by grinding lithium nickelate (LiNi_{0.8}Co_{0.15}Al_{0.05}O₂) particles (obtained from Sigma-Aldrich Co., LLC) with a jet mill in a manner that the cumulative 90% volume-based particle diameter D₉₀ would become less than 3 micrometers was used instead of the lithium vanadium phosphate (Li₃V₂(PO₄)₃) particles. The mode diameter of the obtained positive electrode active substance 4 was 1.2 micrometers.

### (Positive electrode active substance production example 5)

### -Production of positive electrode active substance 5-

A positive electrode active substance 5 was obtained in the same manner as in Positive electrode active substance production example 1, except that unlike in Positive electrode active substance production example 1, a product obtained by grinding Ni-Mn-Co-based (LiNi_{1/3}Mn_{1/3}Co_{1/3}O₂) particles (obtained from Sigma-Aldrich Co., LLC) with a jet mill in a manner that the cumulative 90% volume-based particle diameter D₉₀ would become less than 3 micrometers was used instead of the lithium vanadium phosphate (Li₃V₂(PO₄)₃) particles. The mode diameter of the obtained positive electrode active substance 5 was 0.9 micrometers.

### (Positive electrode active substance production example 6)

### -Production of positive electrode active substance 6-

A positive electrode active substance 6 was obtained in the same manner as in Positive electrode active substance production example 1, except that unlike in Positive electrode active substance production example 1, a product obtained by grinding lithium manganate (LiMn₂O₄) particles (obtained from Sigma-Aldrich Co., LLC) with a jet mill in a manner that the cumulative 90% volume-based particle diameter D₉₀ would become less than 3 micrometers was used instead of the lithium vanadium phosphate (Li₃V₂(PO₄)₃) particles. The mode diameter of the obtained positive electrode active substance 6 was 1.2 micrometers.

### (Negative electrode active substance production example 1)

### -Production of negative electrode active substance 1-

A negative electrode active substance 1 was obtained in the same manner as in Positive electrode active substance production example 1, except that unlike in Positive electrode active substance production example 1, a product obtained by grinding artificial graphite (obtained from MT Carbon Co., Ltd.) with a jet mill in a manner that the cumulative 90% volume-based particle diameter D₉₀ would become less than 3 micrometers was used instead of the lithium vanadium phosphate (Li₃V₂(PO₄)₃) particles. The mode diameter of the obtained negative electrode active substance 1 was 1.8 micrometers.

### (Negative electrode active substance production example 2)

### -Production of negative electrode active substance 2-

A negative electrode active substance 2 was obtained in the same manner as in Positive electrode active substance production example 1, except that unlike in Positive electrode active substance production example 1, a product obtained by grinding lithium titanate (Li₄Ti₅O₁₂) particles (obtained from Sigma-Aldrich Co., LLC) with a jet mill in a manner that the cumulative 90% volume-based particle diameter D₉₀ would become less than 3 micrometers was used instead of the lithium vanadium phosphate (Li₃V₂(PO₄)₃) particles. The mode diameter of the obtained negative electrode active substance 2 was 0.7 micrometers.

### (Example 1)

### <Synthesis of compound 1>

A compound 1 was synthesized in the manner described below according to the reaction formula below.

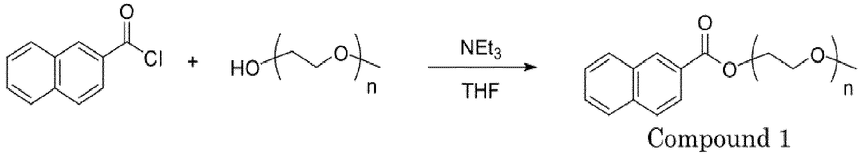

A 200 mL flask was charged with oligoethylene glycol monomethyl ether (where n was about 9) (7.000 g) (16.33 mmol), and the system was purged with nitrogen. Dry tetrahydrofuran (THF) (80 mL) was added to the resultant to cool the resultant to 0 degrees C, and subsequently 2-naphthoyl chloride (7.784 g) (40.84 mmol) was added to the resultant. Into this solution, triethylamine (NEts) (7 mL) was slowly dropped. After dropping was completed, the resultant was stirred overnight while being gradually returned to room temperature. Water was added to the reaction solution, and subsequently the resultant was extracted with ethyl acetate. The obtained organic layer was washed with a saturated saline solution and subsequently dried with anhydrous sodium sulfate. The desiccant was filtered out from the resultant by suction filtration, and subsequently the solvent was evaporated from the resultant at reduced pressure. The residue was purified by column chromatography, and subsequently dried in a vacuum, to obtain the intended compound 1 (8.413 g) (yield: 88%). n was about 9.

### (Example 2)

### <Synthesis of compound 2>

A compound 2 was synthesized in the manner described below according to the reaction formula below.

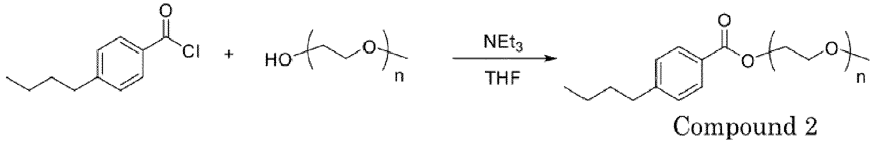

The compound 2 was synthesized (yield: 93%) in the same manner as in Example 1, except that unlike in Example 1, 4-butylbenzoyl chloride was used instead of 2-naphthoyl chloride. n was about 9.

### (Example 3)

### <Synthesis of compound 3>

A compound 3 was synthesized in the manner described below according to the reaction formula below.

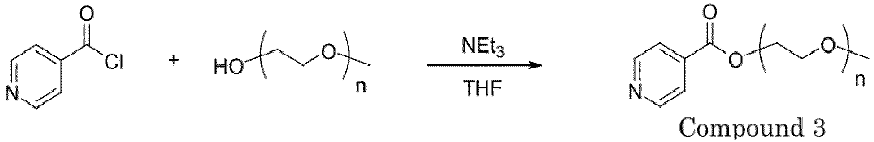

The compound 3 was synthesized (yield: 93%) in the same manner as in Example 1, except that unlike in Example 1, isonicotinoyl chloride was used instead of 2-naphthoyl chloride. n was about 9.

### (Example 4)

### <Synthesis of compound 4>

A compound 4 was synthesized in the manner described below according to the reaction formula below.

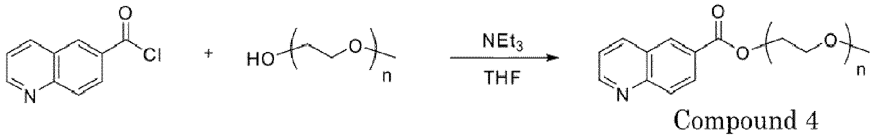

The compound 4 was synthesized (yield: 85%) in the same manner as in Example 1, except that unlike in Example 1, quinoline-6-carbonyl chloride was used instead of 2-naphthoyl chloride. n was about 9.

Next, the electrochemical stability of the compounds 1 to 4 synthesized in Examples 1 to 4 was evaluated by cyclic voltammetry (CV) in the range of from 0.05 V through 4.2 V (vs Li/Li⁺) and subsequent linear sweep voltammetry (LSV) in which the potential was swept from 3 V through 4.6 V.

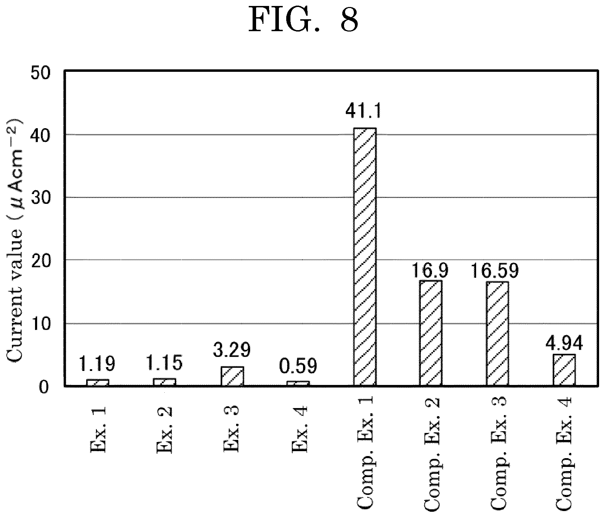

For evaluation of the electrochemical stability, the measurement was performed using a three-electrode cell (obtained from EC Frontier Co., Ltd., MICROANALYTICAL CELL VB7) including a working electrode Pt (with a diameter of 1.6 mm), a counter electrode Pt (with a diameter of 3 mm), and a reference-electrode Li foil, and with addition of 5% by mass of each of the compounds 1 to 4 synthesized in Examples 1 to 4 to an electrolytic solution (EC/DMC/EMC=1/1/1 to which LiPF₆ (1.5 M) was added). FIG. 8 plots the current values observed at 4.2 V in the LSV measurement.

### (Comparative Examples 1 to 4)

The electrochemical stability of a comparative compound 1, a comparative compound 2, a comparative compound 3, and a comparative compound 4 represented by the formulae below was evaluated in the same manner as in Examples 1 to 4. FIG. 8 also plots the current values observed at 4.2 V in the LSV measurement.

In the comparative compound 1, the comparative compound 2, the comparative compound 3, and the comparative compound 4 represented by the formulae below, n was about 10.

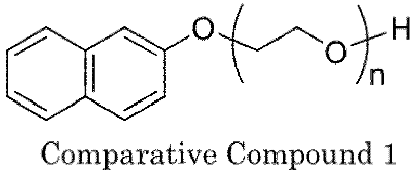

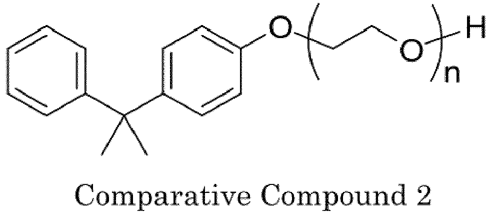

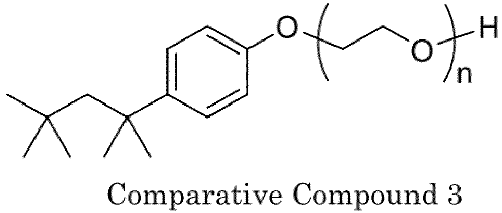

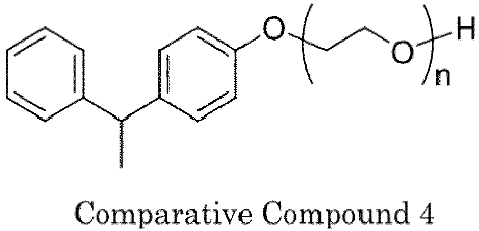

The results of FIG. 8 indicates that when the compounds 1 to 4 of Examples 1 to 4 were used, substantially no current was observed at 4.2 V, whereas when any of the comparative compounds 1 to 4 of Comparative Example 1 to 4 was used, an irreversible electrochemical oxidation reaction occurred at 4.2 V, which was an undesirable result for application to an electrochemical element.

Accordingly, the compounds 1 to 4 of Examples 1 to 4 were found suitable for use as a dispersant of a liquid composition containing, for example, an active substance, an insulating material, and an electrolyte material.

### (Example 5)

### <Preparation of liquid composition for forming positive electrode>

To a solid formed of the positive electrode active substance 1 (93.1% by mass), the compound 1 (0.9% by mass), carbon black (3% by mass), and polyamide imide (3% by mass), N methyl pyrrolidone was added in a manner that the concentration of the solid would become 35.8% by mass, to produce a liquid composition for forming a positive electrode.

The obtained liquid composition for forming a positive electrode had a viscosity, a 25 degrees C, of 14 mPa·s, a mode diameter of 0.7 micrometers, and a cumulative 90% volume-based particle diameter D₉₀ of 3.0 micrometers.

Next, twenty four hours after the liquid composition for forming a positive electrode was produced, the particle size distribution of the liquid composition for forming a positive electrode was measured again. As a result, no change was observed in the particle size distribution, suggesting that the liquid composition for forming a positive electrode of Example 5 had a good storage stability.

Next, using a liquid discharging apparatus (EV2500, obtained from Ricoh Company, Ltd.), the liquid composition for forming a positive electrode of Example 5 was discharged onto an aluminum foil serving as a positive electrode base material, to form a positive electrode. Here, the liquid composition for forming a positive electrode of Example 5 succeeded in being discharged continuously, meaning that the liquid composition for forming a positive electrode of Example 5 had a good discharging stability and no discharging failure. That is, the liquid composition for forming a positive electrode of Example 5 had a good printing efficiency.

### (Example 6)

A liquid composition for forming a positive electrode of Example 6 was produced in the same manner as in Example 5, except that unlike in Example 5, the compound 2 was used instead of the compound 1.

The obtained liquid composition for forming a positive electrode had a viscosity, a 25 degrees C, of 12 mPa·s, a mode diameter of 0.7 micrometers, and a cumulative 90% volume-based particle diameter D₉₀ of 3.0 micrometers.

Next, twenty four hours after the liquid composition for forming a positive electrode was produced, the particle size distribution of the liquid composition for forming a positive electrode of Example 6 was measured again. As a result, no change was observed in the particle size distribution, suggesting that the liquid composition for forming a positive electrode of Example 6 had a good storage stability.

Next, using a liquid discharging apparatus (EV2500, obtained from Ricoh Company, Ltd.), the liquid composition for forming a positive electrode of Example 6 was discharged onto an aluminum foil serving as a positive electrode base material. Here, the liquid composition for forming a positive electrode of Example 6 succeeded in being discharged continuously, meaning that the liquid composition for forming a positive electrode of Example 6 had a good discharging stability and no discharging failure. That is, the liquid composition for forming a positive electrode of Example 6 had a good printing efficiency.

Aspects of the present disclosure are, for example, as follows.
<1> An electrode material
   wherein one selected from the group consisting of monocyclic or polycyclic aryl groups and monocyclic or polycyclic heteroaryl groups, and one selected from the group consisting of alkyl groups and alkylene glycol ether groups are bonded to each other via a carbonyl group.
<2> The electrode material according to <1>,
   wherein the electrode material is represented by General formula (I) below, 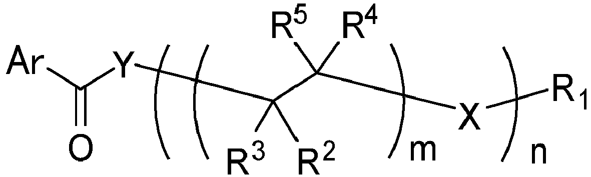 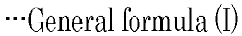 where in General formula (I), Ar represents one selected from monocyclic or polycyclic aryl groups and monocyclic or polycyclic heteroaryl groups, the aryl groups and the heteroaryl groups may each have a substituent(s), R¹, R², R³, R⁴ and R⁵ each independently represent a hydrogen atom, a substituted or unsubstituted alkyl group, or a substituted or unsubstituted cycloalkyl group, X and Y each independently represent a single bond, an oxygen atom, or -CH₂-, and m and n represent positive integers.
<3> The electrode material according to <1> or <2>,
   wherein the electrode material is a dispersant or a binder, or both.
<4> A liquid composition including:
   the electrode material according to any one of <1> to <3>;
   an active substance; and
   a solvent.
<5> The liquid composition according to <4>,
   wherein a content of the active substance is 10% by mass or greater.
<6> The liquid composition according to <4> or <5>,
   wherein the active substance is at least one selected from the group consisting of lithium-containing transition metal oxides, lithium-containing transition metal phosphoric acid compounds, and carbon materials.
<7> The liquid composition according to any one of <4> to <6>,
   wherein the active substance contains lithium and contains no water.
<8> The liquid composition according to any one of <4> to <7>,
   wherein a viscosity of the liquid composition at 25 degrees C is 200 mPa·s or lower.
<9> An electrode including:
   an electrode base material; and
   a layer containing the electrode material according to any one of <1> to <3> and an active substance, the layer being present on the electrode base material.
<10> An electrochemical element including
   the electrode according to <9>.
<11> A method for producing an electrode, the method including
   discharging the liquid composition according to any one of <4> to <8> onto an electrode base material.
<12> The method for producing an electrode according to <11>, the method further including
   pressurizing the electrode base material onto which the liquid composition is discharged.
<13> A method for producing an electrochemical element, the method including
   a step formed of the method for producing an electrode according to <11> or <12>.

The electrode material according to any one of <1> to <3>, the liquid composition according to any one of <4> to <8>, the electrode according to <9>, the electrochemical element according to <10>, the method for producing an electrode according to <11> or <12>, and the method for producing an electrochemical element according to <13> can solve the various problems in the related art and achieve the object of the present disclosure.

## Claims

1. An electrode material
wherein one selected from the group consisting of monocyclic or polycyclic aryl groups and monocyclic or polycyclic heteroaryl groups, and one selected from the group consisting of alkyl groups and alkylene glycol ether groups are bonded to each other via a carbonyl group.

2. The electrode material according to claim 1,
wherein the electrode material is represented by General formula (I) below, 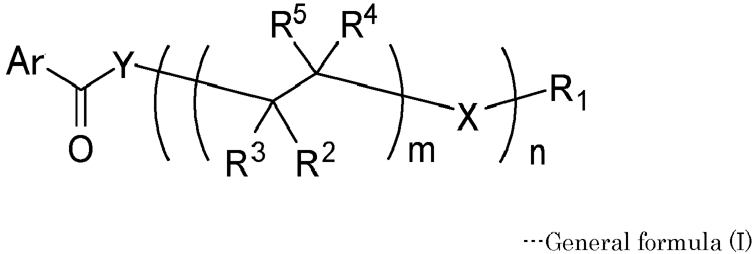
where in General formula (I), Ar represents one selected from monocyclic or polycyclic aryl groups and monocyclic or polycyclic heteroaryl groups, the aryl groups and the heteroaryl groups may each have a substituent(s), R¹, R², R³, R⁴ and R⁵ each independently represent a hydrogen atom, a substituted or unsubstituted alkyl group, or a substituted or unsubstituted cycloalkyl group, X and Y each independently represent one selected from a single bond, an oxygen atom, -(CH₂)ₚ-, and -(CH₂)ₚCH- where p represents an integer of from 1 through 10, and m and n represent positive integers.

3. The electrode material according to claim 1 or 2,
wherein the electrode material is a dispersant or a binder, or both.

4. A liquid composition comprising:
the electrode material according to any one of claims 1 to 3;
an active substance; and
a solvent.

5. The liquid composition according to claim 4,
wherein a content of the active substance is 10% by mass or greater.

6. The liquid composition according to claim 4 or 5,
wherein the active substance comprises at least one selected from the group consisting of lithium-containing transition metal oxides, lithium-containing transition metal phosphoric acid compounds, and carbon materials.

7. The liquid composition according to any one of claims 4 to 6,
wherein the active substance contains lithium and contains no water.

8. The liquid composition according to any one of claims 4 to 7,
wherein a viscosity of the liquid composition at 25 degrees C is 200 mPa·s or lower.

9. An electrode comprising:
an electrode base material; and
a layer containing the electrode material according to any one of claims 1 to 3 and an active substance, the layer being present on the electrode base material.

10. An electrochemical element comprising
the electrode according to claim 9.

11. A method for producing an electrode, the method comprising
discharging the liquid composition according to any one of claims 4 to 8 onto an electrode base material.

12. The method for producing an electrode according to claim 11, the method further comprising
pressurizing the electrode base material onto which the liquid composition is discharged.

13. A method for producing an electrochemical element, the method comprising
a step formed of the method for producing an electrode according to claim 11 or 12.
